# EUROPEAN PATENT APPLICATION

(11) **EP 4 671 597 A1**
(43) Date of publication of application: **31.12.2025**
(21) Application number: 24183905.9
(22) Date of filing: 24.06.2024
(51) Int. Cl.: F16N 7/28

(54) **A CHAIN LUBRICATING DEVICE**

(71) Applicant: Cyclowax BV, 9070 Destelbergen (BE)
(72) Inventor: LORRE, Jakob, 9810 Nazareth-De Pinte (BE); MONTGOMERY, Gareth, 2970 Schilde (BE); NEUS, Frederik, 9070 Destelbergen (BE)
(74) Representative: IP HILLS NV

(57) **Abstract**

A chain lubricating device is provided. The chain lubricating device comprises:
- a bath adapted to hold molten wax;
- a chain guiding system adapted for guiding and immersing a part of the chain in the bath holding molten wax;
- a driving system to move the chain through the chain guiding system;
- a heating means to melt and heat wax in said bath; and
- a control means to determine the temperature of the molten wax and to control the heating by the heating means in function of the determined temperature.

## Description

### Field of the Invention

The present invention generally relates to chain lubricating devices, in particularly chain lubricating devices for lubricating bicycle chains, and more in particular to chain lubricating devices for lubricating bicycle chains when installed on a bicycle. The present invention further relates to methods to lubricate chains, particularly lubricating bicycle chains, and more in particular lubricating bicycle chains when installed on a bicycle.

### Background of the Invention

Chains are well known to transmit power between various elements of a mechanical system. Chains are part of drive chains and in order to guarantee proper transmission, a chain needs to be well lubricated, allowing the various elements of the chain, like the consecutive chain links, the rivets of pins, the outer and inner plates, the rollers, etc. to move and rotate one in view of the other.

Using liquid oils or grease to provide lubrication is well known. However these oils or greases attract and capture dirt during use of the chain, which may accumulate and even disturb the functioning of the chain.

In 1898, US613833 disclosed a system to use heated liquid to lubricate a chain. Using molten wax is also known as lubricant for chains. Waxes have the advantage to capture less dirt during use. However there is a need for a system to efficiently lubricate chains, with an improved degree of uniform lubrification along the whole length of the chain.

### Summary of the Invention

According to a first aspect of the invention, a chain lubricating device is provided. The chain lubricating device comprises a bath adapted to a lubricating liquid, sch as liquid wax or a liquified solid wax, liquified by melting the solid wax. This chain lubricating device comprises also a chain guiding system adapted for guiding and immersing a part of the chain in the bath holding a lubricating liquid and a driving means to move the chain through the chain guiding system. The chain lubricating device further comprises a control means to determine the temperature of the lubricating liquid and to control the temperature of the lubricating liquid by heating and/or cooling the lubricating liquid in function of the determined temperature.

Thus the chain lubricating device may comprise a heating means and/or a cooling means to head or respectively cool the lubricating liquid.

The lubricating liquid may be e.g. a lubricating oil or grease or wax in liquid form. The lubricating liquid may be obtained as well by melting a solid grease or wax. Preferably a solid wax is used, which solid wax is melted prior to immersing a part of the chain in the bath holding the molten wax.

According to a first form of the first aspect of the invention, a chain lubricating device is provided. The chain lubricating device comprises:
- a bath adapted to hold molten wax;
- a chain guiding system adapted for guiding and immersing a part of the chain in the bath holding molten wax;
- a driving system to move the chain through the chain guiding system;
- a heating means to melt and heat wax in said bath; and
- a control means to determine the temperature of the molten wax and to control the heating by the heating means in function of the determined temperature.

The features of the first aspect of the invention will be set out in view of this first form of the invention, however it is clear that the features may also be used for other forms and alternatives of the first aspect of the invention.

The chain lubricating devices of the first aspect of the invention have the advantage that the lubrication action of the chain lubricating device is not dependent on the ambient temperature, nor on the condition of the chain entering and leaving the bath. When applying heat to the chain, in order to heat the wax or keep the wax at temperature, and in order to have a properly heated chain throughout the depth of the chain, the chain needs to be brought to an outer temperature which is well above the melting temperature of the wax. When the chain enters the molten wax, the wax first contacting the heated chain may become too hot. During immersing of the chain, the temperature of the chain and the wax will equilibrate while the wax is penetrating the chain. Depending on the initial temperature of the chain, the ambient temperature and the wax temperature, the wax may possibly become too cold to reach the core of the chain. Keeping this balance at level to achieve complete waxing of the chain is very difficult if not impossible. The result is an uneven, possibly incomplete waxed chain, which may cause more chain wear and less performant force transmission by the chain.

By controlling the temperature of the molten wax itself, the wax contacts the chain at a well-defined proper temperature, herein after referred to as set temperature. The chain, which usually is colder than the molten wax, will continuously be provided with thermal energy since the wax is kept at the required temperature by a third means, independent the temperature of the chain. Keeping this temperature constant, hence providing the required thermal energy, the wax will heat the chain gradually and allows the molten wax to penetrate completely at the same temperature. Therefore, a proper complete waxing of the chain may be achieved, using the thermal energy very efficient.

Further, the process of lubrification, which may also be referred to as waxing in this case, may be conducted at any ambient temperature, and does not need to have complex chain heating means.

In the context of this invention, a bath is referred to as a device or element in which liquid, like molten wax, can be held. The bath may be a structure which comprises a receptacle, in which the liquid, in the context of the invention, molten wax, is held, and which receptacle is coupled to the chain lubricating device. Alternatively, the bath may comprise a holder for holding a container, which container may be placed in and may be taken out of the holder. The container is hence a loose element which may be put in and taken out of the chain lubricating device. A cartridge refers to a closed or closeable container in which wax, in solidified state, may be present. The cartridge may be a container itself, being adapted to be put in the holder as such, or may be adapted to be provided in a container prior to mounting this container in the holder.

Also when another lubrification is used, like a lubricating oil or alike, controlling and trying to keep the temperature at the set level provide a similar positive effect as to the lubrification of the chain.

Other forms may alternatively and/or additionally comprise a cooling means to cool the molten wax or the alternative lubrification liquid used.

According to some embodiments, the control means may comprise a PID temperature controlling means.

PID stands for Proportional-Integral-Derivative. A PID temperature controlling means being part of a control means adjusts the power to the heating means. Data in the determined temperature is used in a feedback loop, and the determined temperature is continuously compared it to a desired temperature.

The PID temperature controlling means may further comprise one or more temperature sensors in or on the bath, measuring a temperature value. The PID temperature controlling means may have a desired temperature with which the determined temperatures are compared with. Possibly the control means may have an interface via which the user may tune or set the desired temperature according to the specifications of the wax or its own requirements.

The use of such PID temperature controlling means in combination with the heating means to melt and heat wax in said bath, has the advantage that the temperature of the molten wax can be kept within very limited tolerances, e.g. within a range of the desired temperature plus or minus 5°C, even within a range of the desired temperature plus or minus 3°C, e.g. within a range of the desired temperature plus or minus 1°C. This can be done independent the ambient conditions, like ambient temperature, and/or the temperature of the incoming chain in the molten wax. As such an even better controlled lubrication of the chain may be obtained, and a much more reliable and uniform lubrication along the length of the lubricated chain is achieved, since the temperature of the wax determines significantly the degree of penetration of the molten wax between the chain links and between the elements constituting the chain links, like the inner and outer plates, the pins like bearing pins, rollers, bushes and alike.

Preferably the set temperature for the molten wax is in the range of 50 to 150°C, dependent on the melting temperature of the wax used. More preferred, the set temperature for the molten wax is in the range of 75 to 125°C, such as in the range of 80 to 100°C, e.g. 90°C or 95°C.

The one or more temperature sensors in or on the bath may be used to provide information on the temperature of the wax during use. Upon activating the chain lubricating device, at least one but possibly all these sensors normally will sense the ambient temperature. This temperature initially measured, can be used as temperature information on the ambient conditions the chain lubricating device works in. The amount of thermal energy to be provided, determined by the PID temperature controlling means, may use this temperature initially measured as an element to define the to control the heating by the heating means in function of the determined temperature.

In order to take changing ambient temperatures during use of the chain lubricating device into account, preferably at least one temperature sensor is provided to sense and measure the actual ambient temperature. Possibly this one temperature sensor may be substituted, or the input of this one temperature sensor may be substituted, by input provided from an external device measuring said ambient temperature and/or providing information on the ambient temperature. As an example a temperature sensor being part of a portable device, like a smart phone or a weather station may be used instead, or the information which is generated by such smart phone or weather station. The chain lubricating device, e.g. its PID temperature controlling means, may comprise a communication device to transmit and receive such thermal information generated by such device, such as smart phone or a weather station. For this communication, an on-board processor may be provided to the control system. The chain lubricating device and a device providing such thermal information may communicate through a close proximity communication system, like Bluetooth or other short distance point-to-point technology. Obviously, when combined with internet connectivity, an on-board processor may use alternative ways to communicate the signals to the user, using for instance WIFI, 4G, 5G or narrow band IoT wireless networks.

In order to ensure a better correspondence between the actual wax temperature and the temperature sensed and measured by the temperature sensor(s), the temperature sensor(s) is (are) preferably in contact directly with the molten wax.

The thermal sensor or sensors used to measure the actual temperature of the wax, molten or not, may either be submerged in the wax, or may be located at or in the bath. Thermal sensors submerged in the wax may be used. Alternatively, some or all the thermal sensors may be located at the inner wall of the bath, e.g. in the receptacle or container, in the wall of the bath, e.g. in the receptacle or container or at the outer wall of the bath, e.g. in the receptacle or container. For thermal sensors located in or at the outer side of the bath, e.g. in the receptacle or container, preferably the bath, e.g. in the receptacle or container is provided from thermally well-conducting materials, like metal, e.g. aluminum, e.gf. anodized aluminum.

Possibly one or more of the temperature sensor(s) are mount on the chain guiding system, in particularly the part which is immersed in the molten wax.

As a further alternative, some or all the thermal sensors may be non-contact or touchless thermal sensors, like infrared or infrared laser temperature sensors.

According to some embodiments, the control means may control the movement of the chain by controlling the driving system.

In particularly the control means controls the speed of the chain when being moved through the bath, by controlling the driving system. The driving system may comprise one or more driving wheels adapted to move the chain, and a driving mechanism rotating at least one of the driving wheels, like a gear wheels. This driving mechanism may comprise at least one motor like an electromotor. The control means may control the rotational speed of this at least one motor, which may cause the rotational speed of the one or more driving wheels to be controlled.

As an example, the control means controls the speed of the chain based upon amongst others the temperature of the molten wax and the ambient temperature, more preferably the difference between temperature of the molten wax and the ambient temperature. The retention time and the temperature of the chain, which equals the ambient temperature upon entering the bath of molten wax, play an important role in providing a proper lubrication the chain.

As such the retention time of the part of the chain being immersed in the molten wax may be tuned in function of the temperature determined by the control means. The retention time may be longer by driving the driving system slower, when the temperature is lower.

Again, as such an even better controlled lubrication of the chain may be obtained, and a much more reliable and uniform lubrication along the length of the lubricated chain is achieved, since also the retention time of the chain in the wax determines significantly the degree of perpetration of the molten wax between the chain links and between the elements constituting the chain links, like the inner and outer plates, the pins like bearing pins, rollers, bushes and alike.

It is clear that the provision of a PID temperature controlling means in combination with this control means controlling the speed of the chain when being moved through the bath, is preferred.

According to some embodiments, the driving system may comprise at least one gear wheel for contacting and moving the chain.

As such the one or more gear wheels may cooperate with the chain guiding system, may even be part of it. Preferably only one gear wheel is used, although two three or more gear wheels may be used to move the chain through bath of molten wax. Preferably a gear wheel is driven, this driven gear wheel being positioned at the end of the driving system, such the gear wheel pulls the chain trough the molten wax.

The driving system may comprise an electromotor, such as a stepper motor or a servo-motor, to drive the gear wheel, optionally using an intermediate reducer system like a reduction gear box.

This way, the chain lubricating device has the advantage that the chain can stay mounted on the machine or device it is part of. When the chain lubricating device is adapted to lubricate the chain of a bicycle of similar vehicle, the wheels may be kept stand-still, in case there is a freewheel provided in the cassette of the bicycle. Hence as such the chain lubricating device may comprise a holding system to hold a bicycle in upright position.

In general, the chain lubricating device may comprise a positioning means to position the chain lubricating device in a fixed position in view of the machine of device of which a chain is to be lubricated. This positioning means may comprise a frame on which the bath , the chain guiding system, the driving system, the heating means and the control means in mounted. In case the chain lubricating device is a chain lubricating device for lubricating chains of bicycles, the frame may comprise the holding system to hold a bicycle in upright position and in a fixed provision in view of the other elements of the chain lubricating device.

The frame may be a frame which can be set and adapted in more than one, like two or three directions.

The frame may comprise a blocking means to block the rotation of the wheel, i.e. the wheel during use being driven by the chain to be lubricated. The driving system may move the chain in the free running direction allowed by the freewheel provided in the cassette.

Alternatively the frame may comprise a holding system to hold the bicycle frame, with the wheel, i.e. the wheel during use being driven by the chain to be lubricated, in a position allowing the wheel to move the chain. The driving system may rotate the wheel opposite to the free running direction allowed by the freewheel provided in the cassette, as such moving the chain and hence moving the chain through the bath of molten wax.

As a further alternative, the frame may comprise a holding system to hold the bicycle frame, with the wheel, i.e. the wheel during use being driven by the chain to be lubricated, in a position allowing the chain to rotate the wheel. The driving system may rotate the chain opposite to the free running direction allowed by the freewheel provided in the cassette, as such moving the wheel while moving the chain through the bath of molten wax.

The chain lubricating device may further comprise a positioning means to position the chain in view of the bath and a chain guiding system when installing the bicycle on the chain lubricating device.

As an example, the frame, holding the bath (the receptacle or the container or the cartridge), the chain guiding system, the driving system and the heating and controlling means in an adaptable but fixed position, further comprises two substantially parallel guiding plates. Each guiding plate is adapted to contact one outer side of the wheel, the plate closest to the other elements of the chain lubricating device, hence the one at the side of the wheel where the chain and cassette is present, is preferably in a fixed position in view of the frame, and is substantially vertically oriented.

The second guiding plate is adapted to contact the other side of the wheel, and is moveable, e.g. slidingly moveable, in a direction perpendicular to the surface of the guiding plates. Between the two guiding plates, two or more, but preferably two rodlike elements are provided to contact the circumference of the wheel, and as such provide two or more supports to support the wheel by in vertical direction. By putting and resting the wheel on the two rodlike elements and move the second guiding plate towards the first guiding plate, clamping the wheel in axial direction, the wheel is positioned in view of the frame. In case the positions of the other elements of the chain lubricating device are adapted and fixed to the frame in line with the dimensions of the wheel and chain, each time the wheel is positioned in the chain lubricating device, the chain is in the correct position to be lubricated.

According to some embodiments, the chain guiding system may comprise at least a first plunger to push the chain in the molten wax in the bath, said first plunger has a contact surface to contact the chain and is moveable from a first position to a second position, in the first position the lower point of the contact surface of the first plunger is above the bath, in the second position the lower point of the contact surface of the first plunger is in the bath.

The contact surface of the plunger is above the bath means that the lowermost point of the surface is above the uppermost point of the rim of the bath. The contact surface of the plunger being in the bath means that the lowermost point of the surface is under the lowermost point of the rim of the bath. More preferred, in first position, the lowermost point of the surface is vertically distanced above the uppermost point of the rim of the bath over a distance at least being equal to the height of the chain, also referred to as the plate height. More preferred, in second position, the lowermost point of the surface is vertically distanced above the bottom of the bath over a distance at least being equal to the height of the chain, also referred to as the plate height, but under the under the lowermost point of the rim of the bath over a distance at least being equal to the height of the chain.

As the contact surface of the plunger contacts the upper side of the chain, the chain will be pushed downwards when the plunger moves from its first to its second position, and when the bath is properly filled with molten wax, this action will immerse the chain in the molten wax over at least a part of the chain length.

Preferably the contact surface of the plunger is a curved surface, like a cylindrically curved surface, having its convex side oriented towards the chain and the axis of the curve being perpendicular to the length of the chain.

Preferably the plunger comprises an idler pulley providing the contact surface.

The chain guiding system hence may a first plunger to push the chain in the molten wax in the bath, said plunger comprises at least one idler pulley having its axis perpendicular to the chain, wherein this idler pulley has its axis above the chain and is moveable from a first position to a second position, in the first position, in the first position the lower point of the surface of the plunger is above the bath, in the second position lower point of the surface of the plunger of the plunger is in the bath.

According to some embodiments, the chain guiding system further comprises at least two idler pulleys both having their axis parallel to each other and perpendicular to the chain, wherein in the direction of movement of the chain, the two idler pulleys have their axes position under the chain but above the bath, the first plunger being positioned in direction of the chain movement, between the two idler pulleys.

Hence, the plunger, also referred to as moveable idler pulley, or moveable third idler pulley, moves in a direction perpendicular to the chain and perpendicular to its axis of rotation. This movement may be provided by any moving means, like a motor and transmission that converts a rotation into a linear movement. Preferably an electromotor, like a stepper motor or a servo motor, is used to rotate a lead screw, while the plunger is mounted to the nut on this lead screw and hance follows the movement of the nut. This lead screw is thus mounted preferably having its axis perpendicular to the direction of movement of the chain. The plunger may be provided with a guiding device, such as a guiding rail, in order to prevent the contact surface to rotate along with the lead screw.

Alternatively the electromotor, like a stepper motor or a servo motor, is used to rotate a gear wheel, which gear wheel may rotate the lead screw.

As another alternative, the electromotor, like a stepper motor or a servo motor, is used to rotate a gear wheel, which gear wheel may move a tooth rack and as such providing a linear movement to the plunger connected to this rack.

This plunger, optionally being a moving idler pulley being the middle idler pulley in case three idler pulleys are provided, may cause the chain to be immersed in the molten wax. Hence the plunger may push the chain downwards in the molten wax, while tensioning to some extent the chain. The plunger may be mounted on the outer end a finger or a plate, optionally carrying the axis of the moveable idler pulley, and bringing chain pressed by the plunger in the bath. When bringing the plunger back to the first position, the tension of the chain will cause the chain to straighten again and to come out of the bath of molten wax.

The first and last idler pulley, and optionally all other idler pulleys, may be in a fixed position. Preferably three idler pulleys are provided, one being part of the plunger.

As such, when the chain is to couple to the chain lubricating device, the moveable, optionally middle, idler pulley of the plunger is in its first position. The axis of the first, middle and last idler pulley may be spaced in a directing perpendicular to the chain, such that the chain can be slid between the axes of the idle pulleys without the need to bend the chain. Once the chain is provided between the axes, the moveable, optionally middle, idler pulley is brought in its second position. The chain is tensioned and bend into the bath, hence into the molten wax in the bath when this is present in the bath. By keeping the idle pulleys in these positions, a part of the chain may be immersed in the molten wax, and the driving system the chain may move the chain bit by bit through the molten wax. The driving system may comprise at least one gear wheel for contacting and moving the chain, which gear wheel is driven by a driving means. One of the idle pulleys may be this gear wheel, although the gear wheel is preferably a gear wheel adjacent to the last idler pulley, and having its axis parallel to the axes of the idler pulleys. This gear wheel may also move in a direction perpendicular to the chain and perpendicular to its axis of rotation.

In order to allow the chain to be provided in the chain guiding system, the plunger may be mounted articulating to the direction of movement of the chain and in view of the bath articulating under the bath. As the chain must be provided under the contact surface of the plunger, the chain may be brought towards the surface of the bath by a vertical movement of the chain in view of the bath. The plunger being in place could hinder such movement. By articulating the plunger, in its first position, aside around an axis being under the bath and in a direction substantially parallel to the chain movement direction, the space above the bath may become obstacle free. Once the chain is maneuvered above the bath, the plunger, articulating it in opposite direction, can bring its contact surface above the chain. When the plunger is brought to its second position, the chain may be immersed in the bath.

One of the temperature sensors may be coupled to the plunger, optionally to the mounting support holding the idler, at a position where the sensor is immersed in the wax bath when the plunger is in its second position.

The chain guiding system may comprise two switches to switch off the plunger movement, one switch to switch off the movement when the plunger reaches its first position, one switch to switch off the movement when the plunger reaches its second position. Possibly also a safety switch is installed, in case the movement of the plunger is hindered too much, e.g. when the movement from the first to second position would be initiated when the wax is not yet fully molten, and the movement is hindered by the presence of unmolten, solid wax preventing the plunger to move down.

According to some embodiments, the chain lubricating device may comprise a high frequency vibrating device or an ultrasonic vibrating device adapted to vibrate the molten wax in the bath.

Molten wax in the bath may have the tendency to separate and the additives may no longer remain well and evenly distributed in the molten wax bath. Providing such ultrasonic vibrating device has the advantage that the vibration keeps the additives well distributed in the bath, and keep the molten wax more homogeneous. As such one does not have to rely on the speed of the chain moving though the bath, to stir the molten wax sufficiently to keep the molten wax homogeneous. The vibration also functions as a source of energy, and the vibration energy is partially converted int thermal energy in the bath, which may assist to uphold the temperature in the bath.

Possibly, the high frequency vibrating device or ultrasonic vibrating device may be coupled to the plunger, e.g. to the contact surface of the plunger, the idler pulley, or to the mounting support holding the idler pulley, at a position where the sensor is immersed in the wax bath when the plunger is in its second position.

Using the high frequency or ultrasonic vibrating device further has the advantage that, at least to some extent, the chain is cleaned as well, since dirt present on or in the chain may loosen and may be driven out by the wax penetrating between the elements of the chain.

A high frequency vibrating device is a device which uses vibration in the range of 8 kHz to 20 kHz. Ultrasonic vibrating devices generate and use vibrations at a frequency of more than or equal to 20 kHz. Preferably ultrasonic vibrating device are used. More preferred, the transducer of this ultrasonic vibrating device has an eigenfrequency in the range of 20 kHz to 120kHz, with a preference in the range of 30 kHz to 90 kHz, e.g. about 40 kHz. Preferably the combination of the transducer and the bath (optionally the container), is dimensioned to have an eigenfrequency in this same range, and most preferably in the range of 30 kHz to 50 kHz, like about 40 kHz. The bath and transducer is vibration free mounted in view of the other elements of the chain lubricating device. The preferred transducers may use 30 W to 40W.

The chain lubricating device comprises a heating means to melt and heat wax in said bath. This may be done in various ways. Possibly heat generating elements, like resistance wires and alike, are integrated in the bath, i.e. the receptacle, the cartridge of the container, e.g. near one of more of the sides and/or the bottom of the bath. The control means will control the heating provided by these heat generating elements by e.g. controlling the current or the voltage provided to these elements. Other possible heat generating elements comprise microwave heating elements, infrared heating devices, and alike.

When containers such as cartridges are used, the heat generating elements may be included in the container or cartridge itself, like resistance wires and alike. Upon installing the cartridge in the chain lubricating device, the heat generating elements may become coupled to the control means and as such may be controlled as far as the heat generation in the bath is concerned. Thus the container or cartridge may further comprise coupling means to couple the heat generating elements to a control means of the chain lubricating device. The chain lubricating device may comprise a holding means, like a basket or holder, merely to position and keep the container or cartridge in place. As an example, merely some brackets may be provided to position the container or cartridge in the chain lubricating device, but as such providing the bath of liquefied, molten wax.

Possibly the bath is suited to receive a container or cartridge in which wax is provided. The bath may be used as a bain-marie, also known as "water boiler" or "double boiler". The water is heated to heat the container or cartridge, and as such the wax in the container or cartridge.

According to some embodiments, the bath may comprise a structure for holding a container or cartridge.

It is clear that during lubricating of the chain, on the one hand wax is consumed as wax is taken out of the bath on the waxed chain, and on the other hand, filth may be loosened from the chain in the bath during lubrication, hence the remaining molten wax may become contaminated.

By providing a structure in which a cartridge filled with wax fits, which wax thereafter is molten by the heating means, an easy refilling of the lubricating device and its bath is obtained. Once the chain is lubricated, or optionally once several chains are lubricated, the remain, optionally contaminated wax can be removed, possibly after eventually solidifying again, without the need to handle molten wax. As such an easy and clean operating chain lubricating device is provided.

The cartridge filled with wax may comprise a polymer, metal or metallic container, provided as a polymer, metal or metallic box, having at one side an open surface, via which the chain to be lubricated may be received and leave the box. Preferably the polymer, metal or metallic box may be provided from aluminum optionally anodized aluminum or an aluminum alloy. Other materials for the polymer, metal or metallic box may be paper or cardboard, or alike.

The container of the cartridge, or a bath of the chain lubricating device in which the solid wax is provided as such, may be a polymer, metal or metallic box, having at one side an open surface, via which the chain to be lubricated may be received and leave the box.

More preferred, the polymer, metal or metallic box is a cuboid shaped box, with one of the sides being open. The open side of the polymer, metal or metallic box may be closes and sealed by a polymer film or foil, or by a lid, e.g. a polymer lid.

The preferred dimensions of the bath is in the range of 7.5mm to 100 mm width (i.e. the direction perpendicular to the chain moving direction and parallel to the axes of the rivets or pins), like in the range of 10mm to 50mm, such as in the range of 22mm to 32 mm, e.g. about 28mm; 10mm to 70 mm in depth (i.e. the direction perpendicular to the chain moving direction and perpendicular to the axes of the rivets or pins), e.g. in the range of 30mm to 45 mm, such as in the range of 35mm to 40mm, e.g. about 29.2mm; and 30mm to 250mm in length (i.e. the direction parallel to the chain moving direction); e.g. 30mm to 100 mm in length, such as 40mm to 60mm in length, e.g. about 44mm. the chain is submerged in the bath preferably over at least the thickness of the chain (i.e. the height of the largest chain plate), with a preference of at least 20mm to 25mm depth, thereby referring to the distance between wax surface and the lowest point of the chain in the bath.

The chain lubricating device may use any kind of suitable waxes, adapted to wax chains. The wax which may be used, may be a paraffin wax, a hydrocarbon wax, a microcrystalline wax, any natural wax such as but not limited to bee wax, coconut wax, soy wax, candelilla wax, carnauba wax and castor wax, and any combination of waxes. Preferably the wax, most preferably a paraffin based wax, may optionally comprise friction reducing additives, like graphene, graphite and/or Tungsten disulfide and alike and combinations of those.

The wax may be provided as a solid tablet of wax, or particles or grains of slid wax. Possibly the solid tablet may have the shape of the inner volume of the bath. To the tablet, a holding means, like a bracket, e.g. a metal bracket, may be provided to handle the tablet and to insert the table tint he bath. The holding means is then taken out of the wax when molten.

The wax may be provided as filled cartridges, filled with wax.

The chain lubricating device may further comprise other elements, such as sensors to measure the wear of the chain being lubricated with wax. As an example, during movement of the chain through the chain lubricating device, the distances between adjacent chain links may be measured, and/or the total length of the chain being lubricated. When this total length, or the interdistance of adjacent chain links or elements, is too large, this may be an indication of excessive wear of the chain. For these measurements, one or more optical means, like line cameras or cameras may be used in combination with image processing soft- or hardware. As such, the chain damage and wear may be measured on the spot during use of the chain lubricating device.

The chain lubricating device may generate one or more signals which are communicated to another device, e.g. a smart device like a smart speaker, smartphone, smartwatch, a tablet and alike. This smart device on its turn will provide the user with information on the activity of the chain lubricating device, like a message or alike. Such signals and information may include the status of the ongoing lubrication session, the temperature of the wax, the status of the wax bath, the speed of movement of the chain, and alike.

The chain lubricating device and the smart device may communicate through a close proximity communication system, like Bluetooth or other short distance point-to-point technology. Obviously, when combined with internet connectivity, an on-board processor may use alternative ways to communicate the signals to the user, using for instance WIFI, 4G, 5G or narrow band IoT wireless networks. The signals may be communicated to a software platform bundling a plurality of signals, which thereafter communicates the signals to the end-user.

The smart device may use the received information to keep track of the activities provided by the chain lubricating device, and/or provided to the chain of the bicycle of which the chain is lubricated.

The chain lubricating device may comprise a wax level monitoring device, monitoring the level of molten wax in the cartridge or bath.

The chain lubricating device may comprise an alarm system, generating an alarm when the lubrication session is finished or when the level of molten wax in the cartridge or bath is too ,low. This may be local signals, i.e. noticeable at or near the chain lubricating device. It may e.g. be visible signals, e.g. a LED-light or similar means being lightened or flashing, which LED-light is present on the chain lubricating device. Additionally, or alternatively, the signals may be e.g. auditive signals, e.g. a beeping signal, being generated by a sound generating means on-board of the chain lubricating device.

The signal may as well be one of the signals which are communicated to another device, e.g. a smart device like a smart speaker, smartphone, smartwatch, a tablet and alike.

It is clear that many other control devices and alarm or information signals may be generated, e.g. when the movement of the chain is blocked or hindered too much, when the wax is too hot or too cold, etc.

Hence according to some embodiments, the chain lubricating device further may comprise a chain wear measuring means and/or a chain length measuring means.

Additionally , the chain lubricating device may be adapted to loosen or running-in the chain after being waxed. The chain lubricating device may therefore comprise an additional, second driving system to move the chain at high speed after being waxed. Alternatively the driving system to move the chain through the chain guiding system may comprise a second setting to drive the chain at high speed. Optionally a gearbox or gear system is provided to drive the chain slow through the chain guiding system during waxing, and to drive the chain at high speed after waxing.

It is clear that the mentioned features may be used for other forms of chain lubricating devices according to the first aspect of the invention using other liquified solid lubricants, or liquid lubricants in the same or a similar way.

According the second aspect of the invention a cartridge filled with lubricant, such as a liquid lubricant or a solid lubricant, like wax, is provided. These cartridges may be used in as part of and within the chain lubricating device according to the first aspect of the invention. According to a first form of the second aspect of the invention a cartridge filled with lubricant, such as a liquid lubricant or a solid lubricant, like wax, is provided. These cartridges may be used in as part of and within the chain lubricating device according to the first aspect of the invention.

The cartridge filled with wax or any other lubricant may comprise a polymer, metal or metallic container, provided as a polymer, metal or metallic box, having at one side an open surface, via which the chain to be lubricated may be received and leave the container. Preferably the polymer, metal or metallic box RVS may be provided from aluminum anodized aluminum, or an aluminum alloy.

More preferred, the polymer, metal or metallic box is a cuboid shaped box, with one of the sides being at least partially, optionally fully open. The open side of the polymer, metal or metallic box may be closes and sealed by a polymer film or foil, or by a lid, e.g. a polymer lid. Thus the cartridge may comprise a cuboid polymeric, metal or metallic container at least partially filled with solid wax or any other lubricant adapted to lubricate a chain and, as the case may be, once molten, which cuboid is at least partially, optionally fully open at one side, the open surface being sealed with a polymer film or lid.

The preferred dimensions of such cuboid polymer, metal or metallic box is in the range of 7.5mm to 100 mm width (i.e. the direction perpendicular to the chain moving direction and parallel to the axes of the rivets or pins), like in the range of 10mm to 50mm, such as in the range of 22mm to 32 mm, e.g. about 28mm; 10mm to 70 mm in depth (i.e. the direction perpendicular to the chain moving direction and perpendicular to the axes of the rivets or pins), e.g. in the range of 30mm to 45 mm, such as in the range of 35mm to 40mm, e.g. about 29.2mm; and 30mm to 250mm in length (i.e. the direction parallel to the chain moving direction); e.g. 30mm to 100 mm in length, such as 40mm to 60mm in length, e.g. about 44mm. the chain is submerged in the bath preferably over at least the thickness of the chain (i.e. the height of the largest chain plate), with a preference of at least 20mm to 25mm depth, thereby referring to the distance between the surface of the wax or any other lubricant, and the lowest point of the chain in the bath. The cartridge may comprise heat generating elements in the cartridge itself, like resistance wires and alike. Upon installing the cartridge in the chain lubricating device, the heat generating elements may become coupled to the control means and as such may be controlled as far as the heat generation in the bath is concerned. Thus the cartridge may further comprise coupling means to couple the heat generating elements to a controlling means of a device. Alternatively the cartridge itself may be heated by heat generating elements contacting the outer side of the cartridge. Cartridges with a metal or metallic container are preferably used in this case.

The cartridge may comprise cooling elements in the cartridge itself. Upon installing the cartridge in the chain lubricating device, the cooling elements may become coupled to the control means and as such may be controlled as far as the cooling in the bath is concerned. Thus the cartridge may further comprise coupling means to couple the cooling elements to a controlling means of a device. Alternatively the cartridge itself may be cooled by cooling elements contacting the outer side of the cartridge. Cartridges with a metal or metallic container are preferably used in this case.

The chain lubricating device may comprise a holding means, like a basket or holder, merely to position and keep the cartridge in place. As an example, merely some brackets may be provided to position the cartridge in the chain lubricating device, but as such providing the bath of liquefied, molten wax.

The wax which may be used, may be a paraffin wax, a hydrocarbon wax, a microcrystalline wax, any natural wax such as but not limited to bee wax, coconut wax, soy wax, candelilla wax, carnauba wax and castor wax, and any combination of waxes. Preferably the wax, most preferably a paraffin based wax, may optionally comprise friction reducing additives, like graphene, graphite and/or Tungsten disulfide and alike and combinations of those.

The wax may be provided as a solid tablet of wax, or particles or grains of slid wax.

Hence according the second aspect of the invention, a cartridge filled with wax is provided, such cartridge is hereinafter referred to as wax cartridge.

According to some embodiments, a cartridge comprising a cuboid polymeric, metal or metallic box, at least partially filled with solidified state wax .

According to some embodiments, a cartridge is provided, said cartridge comprising a cuboid metal or metallic box at least partially filled with solid wax or any other lubricant adapted to lubricate a chain as the case may be after being molted, said cuboid being at least partially, optionally fully open at one side, the open surface being sealed with a polymer film or lid.

According to some embodiments, box may be an aluminum or aluminum alloy box.

According to some embodiments, the cartridge may comprise heat generating elements, preferably resistance wires.

The cartridges may be provided with one or more seals to be broken, interrupted or destroyed by inserting or removing the cartridge from the chain lubricating device, as the chain lubricating device may be adapted to use only some specific kinds of waxes or any other lubricant, it may be dangerous to use waxes or any other lubricant which are offset the specification for which the chain lubricating device is set. Therefore, carefully controlling the type of wax or any other lubricant being used, may be important to provide proper lubrification.

A mechanical seal which is broken when inserting or removing the cartridge from the chain lubricating device, and preventing to reuse the cartridge being filled with possibly inappropriate wax or any other lubricant may be provided .

An electronical or electric seal which is prevents to reuse the cartridge being filled with possibly inappropriate wax or any other lubricant may be provided. Such seal may comprise an RFID, a barcode, a chip on the cartridge, a codes to be entered via an interface of the chain lubricating device in order to activate the chain lubricating device when the cartridge is installed, and similar means.

Preferably the cartridge is provided with sufficient wax or any other lubricant to lubricate one or more chains, most preferably only one chain of a given length.

According to a third aspect of the invention, a kit of parts in provided, said kid comprises at least one chain lubricating device according to the first aspect of the invention, and at least one cartridge according to the second aspect of the invention.

According to first form of the third aspect of the invention, a kit of parts in provided, said kid comprises at least one chain lubricating device according to the first form of the first aspect of the invention, and at least one cartridge according to the first form of the second aspect of the invention.

This kit of parts provide a handy and easily moveable means to lubricate a chain with wax or as the case may be or any other lubricant in the cartridge. This kit can be taken along easily during a cycling tour, e.g. a cycling tour comprising a plurality of bicycle care rides, optionally spread over a plurality of days.

According to a fourth aspect of the invention, a method to lubricate a chain is provided wherein a chain lubricating device according to the first aspect of the invention is provided, solid wax or any other lubricant is provided in the bath, this solid wax or any other lubricant is heated and possibly molten in case of a solid lubricant, a chain is mounted in or on the chain lubricating device, and the chain is moved through the molten wax or any other liquid lubricant in the bath of the chain lubricating device along a part or the whole length of the chain.

Preferably this method is used to lubricate a bicycle chain. Hence a method to lubricate a chain of a bicycle is provided, the method comprises:
- providing a chain lubricating device according to the first aspect of the invention;
- providing solid wax or any other lubricant in the bath;
- optionally melting and heating said solid wax or any other lubricant in the bath to provide a liquid lubricant;
- providing a chain to the chain lubricating device;
- moving the chain through the liquid lubricant, such as preferably molten wax, in the bath of the chain lubricating device along a part or the whole length of the chain.

During the step of moving the chain through the liquid lubricant, the temperature of the liquid lubricant, such as preferably molten wax is controlled and the liquid lubricant, such as preferably molten wax, may be further heated and/or cooled, preferably only heated.

Hence a method to lubricate a chain of a bicycle is provided, the method comprises:
- providing a chain lubricating device according to the first form of the first aspect of the invention;
- providing solid wax in the bath;
- melting and heating said solid wax in the bath;
- providing a chain to the chain lubricating device;
- moved the chain through the molten wax in the bath of the chain lubricating device along a part or the whole length of the chain, while controlling the temperature of the molten wax by heating said solid wax in the bath.

According to some embodiments, the bath may comprise a structure for holding a cartridge, the step of providing solid wax or any other lubricant in the bath comprises to provide a cartridge according to the second aspect of the invention, removing the seal to open the cartridge, and providing the cartridge in the structure for holding a cartridge.

According to some embodiments, the chain may be moved through the liquid lubricant, such as preferably molten wax at a speed in the range of 2 to 20 chain links per minute.

More preferred, the chain may be moved through the liquid lubricant, such as preferably molten wax at a speed in the range of 4 to 15 chain links per minute, such as in the range of 5 to 14 chain links per minute, e.g. in the range of 6 to 12 chain links per minute.

This speed may be controlled by the control means, together with and simultaneously with the temperature and the thermal heat provided by the heating means, the cooling by the cooling means or both by the thermal heat provided by the heating means and the cooling by the cooling means.

According to some embodiments, the temperature of the liquid lubricant, such as preferably molten wax in the bath may be kept or controlled in the range of 50°C to 150°.

The set temperature for the liquid lubricant, such as preferably molten wax is preferably in the range of 75 to 125°C, such as in the range of 80 to 100C, e.g. 90°C or 95°C. Preferably a temperature of about 95°C is used.

IN vase of molten wax, more preferred, the set temperature is 30°C to 50°C above the melting temperature of the wax, most preferably 35°C to 45°C above this melting temperature, such as 40°C above the melting temperature.

It is clear that the features of one aspect of the invention may be combined with any or all features of any or all of the other aspects of the invention.

### Brief Description of the Drawings

Fig. 1 illustrates schematically a bicycle mount in a chain lubricating device according to the invention.
Fig. 2 illustrates schematically the chain lubricating device according to the invention.
Fig. 3 and 4 illustrate schematically details of the chain lubricating device of figure 1, the plunger of the device being in a first position.
Fig. 5 and 6 illustrate schematically details of the chain lubricating device of figure 1, the plunger of the device being in a second position.
Fig. 7 illustrates schematically a cross section of another chain lubricating device, the plunger of the device being in a first position.
Fig. 8 illustrates schematically a cross section of another chain lubricating device, the plunger of the device being in a second position.

The same reference signs in the different figures refer to the same or a similar feature throughout the figures.

### Detailed Description of Embodiment(s)

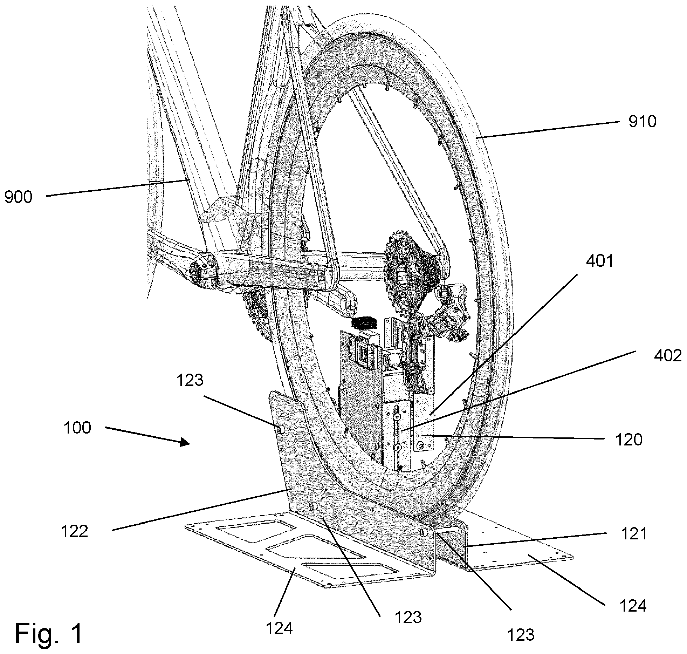

A chain lubricating device 100 according to the present invention is shown in the figures attached. The chain lubricating device 100 as shown in figure 1 comprises a frame 120 to which the elements of the chain lubricating device 100 are mounted, and which is adapted to hold and position a bicycle 900, more particularly the rear wheel 910 of the bicycle.

This frame 120 comprises two substantially parallel guiding plates 121 and 122, being adapted to be positioned upright to the ground. For the latter, these plates may be provided with a support 124, e.g. a foot plate. Each guiding plate 121 and 122 is adapted to contact one outer side of the wheel 910. The plate 121 closest to the other elements of the chain lubricating device, hence the one at the side of the wheel where the chain and cassette is present, is in a fixed position in view of the frame 120, and is substantially vertically oriented. The second guiding plate 122 contacts the other side of the wheel 910, and may slide in a direction perpendicular to the surfaces of the guiding plates.

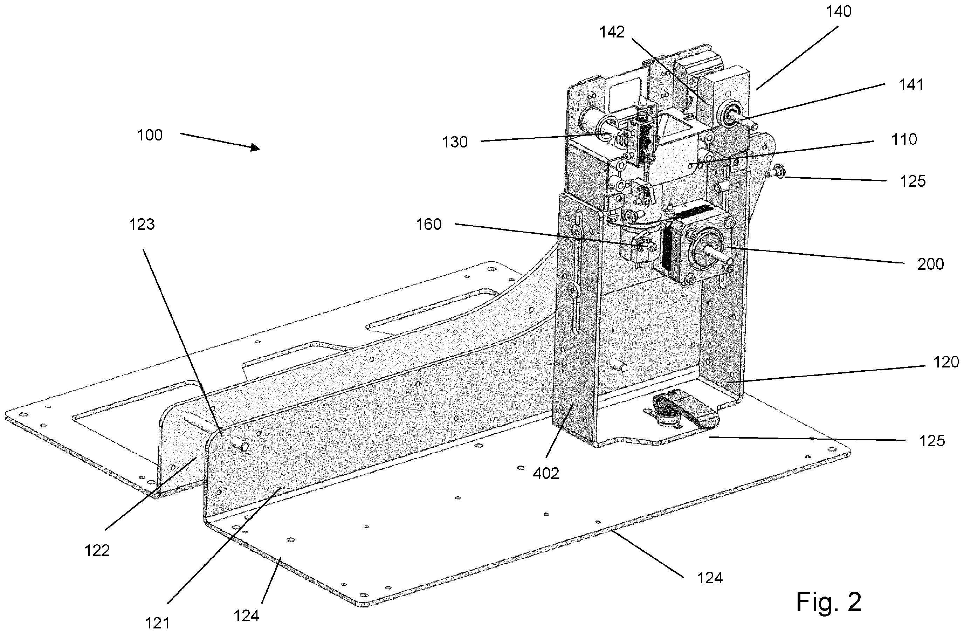

Between the two guiding plates, three rodlike supports 123 are provided When the wheel 910 rests on the supports 123 and by moving the second guiding plate 122 towards the first guiding plate 121, the wheel 910 is clamped in axial direction. As such the wheel 910 is positioned in view of the frame 120. As best visible in figure 2, the other parts of the chain lubricating device may be positioned and fixed to the frame using one or more fixation means 125.

Also best visible in figure 2, the chain lubricating device 100 comprised a bath 110 which is adapted to hold molten wax. A chain guiding system 130 is provided and is adapted for guiding and immersing a part of the chain in the bath 110 holding molten wax. To pull the chain through the molten wax, a driving system 140 is provided. This driving system comprises a stepper motor 141 driving a gear wheel 142.

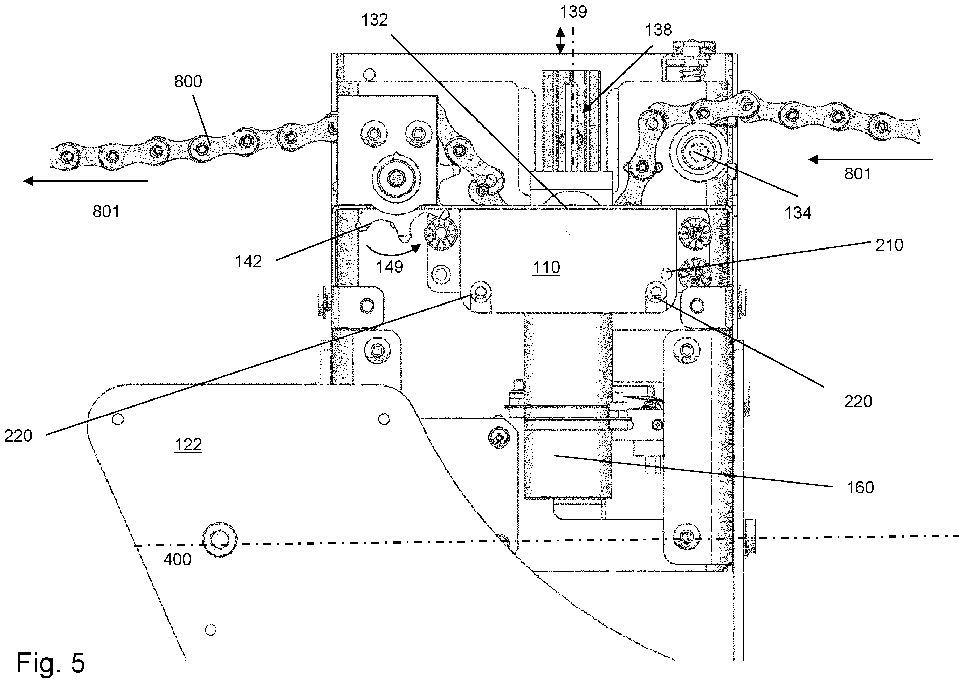

Best visible in figure 5, in the bath, a thermal sensor 210 is provided in the molten wax. Two heating means 220 are provided in the bath as well, to heat and keep the wax at temperature.

The chain lubricating device 100 further comprises a control means 200 comprising a PID temperature controlling means. The thermal sensors and heating means are electrically connected to this control means, as well as the stepper motor 141. Based upon the signals of the thermal sensors, the control means adjust the hearing rate of the heating means, and the speed of the stepper motor 141. As such the temperature of the molten wax can be controlled and kept to a temperature of a set temperature, plus or minus 1°C.

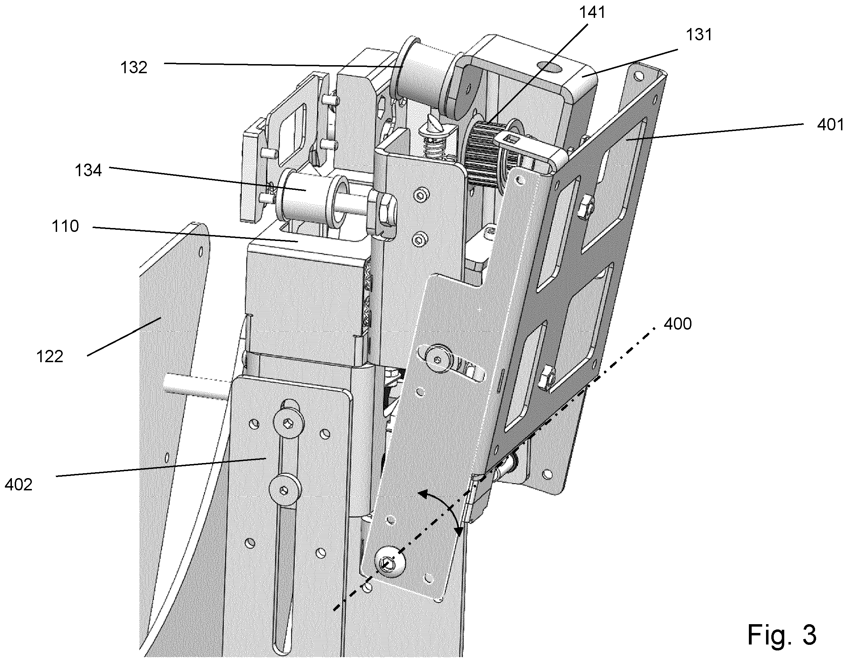

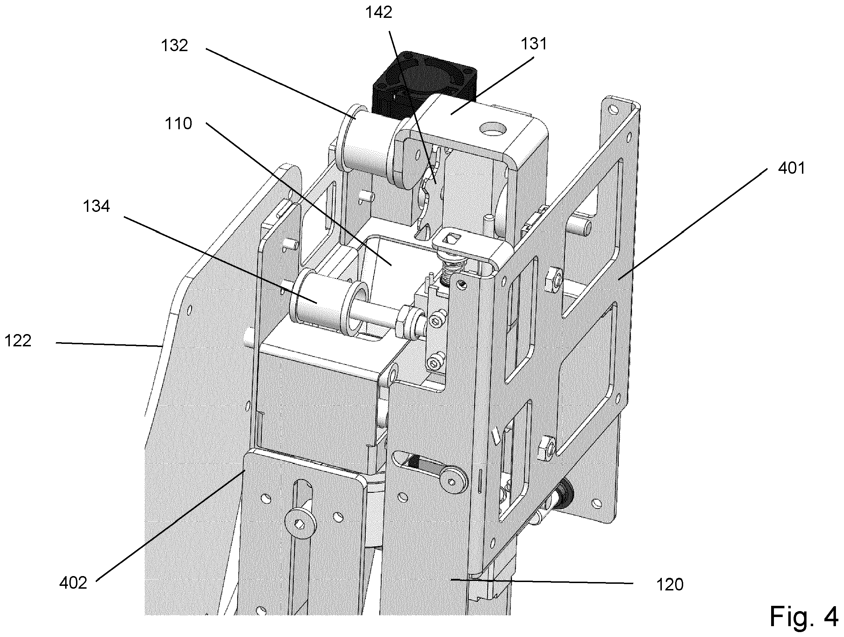

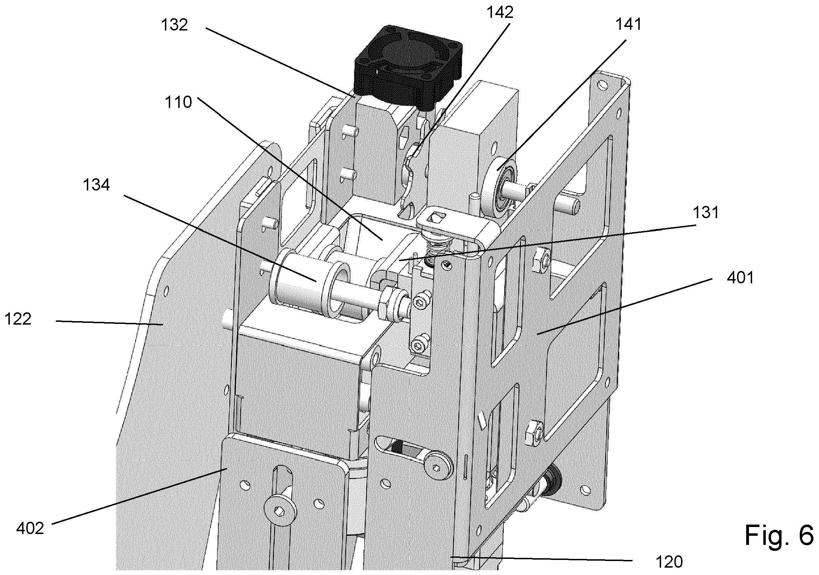

The chain guiding system 130 in this embodiment comprises a plunger 131 to push the chain in the molten wax in the bath 110. The axis 139 of the plunger is shown in figure 5. The plunger is moved by rotating the spindle, while the plunger itself is prevented from rotation due to one or more guiding rails 138 being provided and oriented in the same direction as the axis 319. To this plunger 131, an idler pulley 132 is provided, to contact the chain at the upper side of the chain. The plunger 131 is moveable from a first position shown in figures 3, 4 and 7 to a second position shown in figures 5, 6 and 8. In the first position the lower point of the contact surface of the idler pulley 132 on the plunger 131 is above the bath 110, and above the upper side of the chain 800 In the second position the lower point of the contact surface of the idler pulley 132 on the plunger 131 is well deep in the bath 110, so the chain 800 is submerged in the bath. Prior to the plunger 131 with the idler pulley 132, a second idler pulley 134 is provided, whose axis of rotation is positioned under the chain 800. The chain 800, when pushed and bend downwards into the bath 110, this idler pulley 134 will function as support and bending surface to bend the chain downwards. At the opposite side of the plunger 131 with the idler pulley 132 the chain is contacting the gear wheel 142, which has a double function. As part of the driving means 140, it pulls the chain through the bath 110 while it is guided by the idler pulleys 134 and 132, and it guides the chain 800 out of the bath 110. The chain 800 bends to its horizontal position back on this gear wheel 142.

In an alternative setting, not shown in the figures, the gearwheel is provided adjacent another idler pulley which bends the chain after the plunger 131 out of the bath 110.

The chain lubricating device 100 further comprises an ultrasonic vibrating device 160, which is positioned in the embodiments shown, under the bath 110 and in contact with the lower surface of the bath110. As such, the transducer in the ultrasonic vibrating device 160 is adapted to vibrate the molten wax in the bath 110. The control unit 200 may be electrically connected to the ultrasonic vibrating device 160 to control its functioning, e.g. to switch the ultrasonic vibrating device 160 on or off. In an alternative setting, not shown in the figures, the ultrasonic vibrating device 160 is connected to the plunger 131, via which the vibrations are transferred to the molten wax when the plunger and the idler pulley are submerged in the molten wax. The ultrasonic vibrating device 160 may comprise a 40Watt transducer with an eigenfrequency of 40kHz.

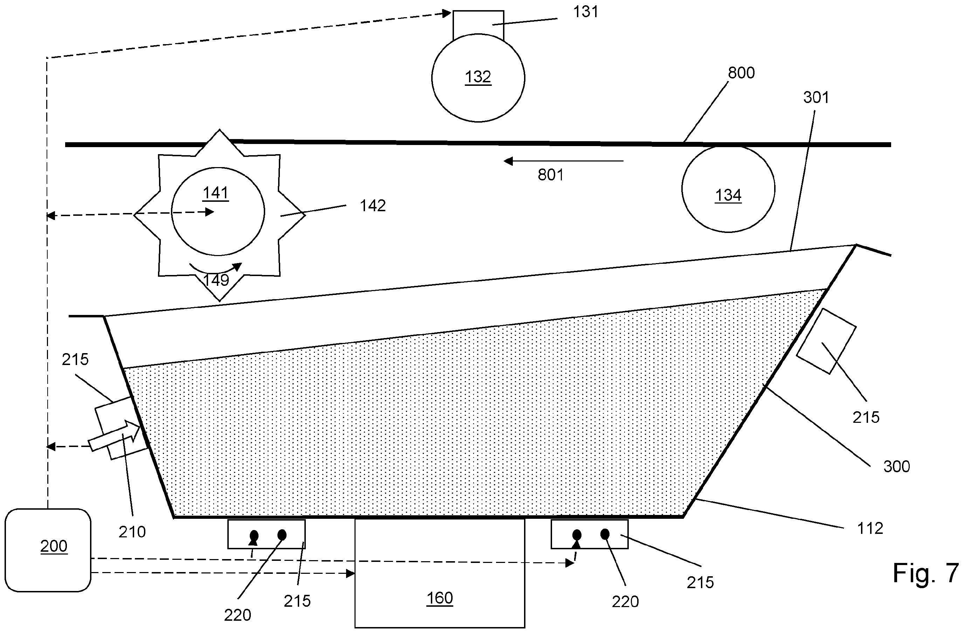

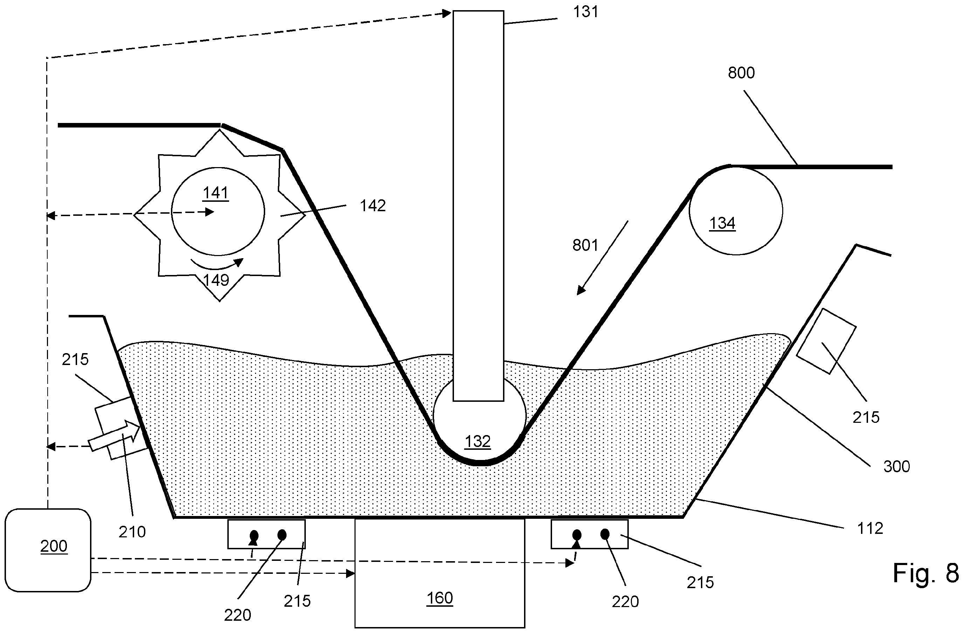

In the embodiment shown in figures 3 to 6, the bath 110 comprises a receptacle 111 in which the wax is provided in solidified shape, e.g. as wax pearls, drops or powder. By switching on the hearing means, thereby heating the bath, the wax melts. In figures 7 and 8, the bath is provided as a cartridge 112 which is supported on supports 215. In some supports, a thermal sensor 210 is integrated. The hearing elements 220 are integrated in other supports 215. As shown in figure 7, the cartridge, having a box 300 is inserted in the chain lubricating device 100 prior or immediately after the cover lid 301 is removed and the cartridge is opened. After melting the wax, the cartridge is ready for use and the chain 800 can be submerged in the cartridge as shown in figure 8.

The cartridge and the receptible may be provided from aluminum, preferably anodized aluminum.

A hinging part 401 of the frame of the chain lubricating device 100, including the plunger, may be rotatable over an axis of one or more hinges at the lower side of the frame, or as shown in figure 3 over an axis 400. By rotating this part 401 aside away from the static part 402, hence away from the support and the other elements of the chain lubricating device 100, the void above the bath may become obstacle free, and allows the bicycle to be mount in the frame easily. Once the bicycle is inserted and held, the rotatable part of the chain lubricating device 100 is brought back to its upright position, the plunger and idler pulley being above the chain to be lubricated. As for bicycles, the chain has two substantially horizontal parts, an upper part (during cycling, moving in forward direction in view of the bicycle between the derailleur and he chain wheels) and a lower part (during cycling, moving in rearward direction in view of the bicycle between the chain wheels and the derailleur), the chain lubricating device may be adjusted in height to either contact the upper part or the lower part. In this embodiment, the plunger and idler pulley will contact the lower part of the chain.

After ensuring the wax is properly molten, the lubrification cycle may start. Once the wax is molten, the plunger is lowered and the idler pulley brings the chain 800 in the molten wax, as shown in figures 5, 6 and 8. The moving means starts to rotate the gear wheel 142 according to the direction indicated 149 (i.e. the free running direction of the derailleur), and slowly the chain 800, moved in a direction 801, is drawn through the molten wax at a speed of about 8 chain links per minute, while the control means controls the temperature of the wax to e.g. 95°C plus or minus 1°C, adjusts the thermal energy provided to the molten wax and the speed of the driving means when required, and controls the vibration activity of the ultrasonic vibrating device vibrating at 40 kHz. The control means controls and counts the length of the chain having passed the bath. Once the whole chain length has been lubricated, the vibration is switched off, the plunger is lifted up to its first position. The chain hangs now free under the plunger. The control means may now control the running -in action to loosen to some extent the freshly waxed chain.

.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A chain lubricating device comprising
- a bath adapted to hold molten wax;
- a chain guiding system adapted for guiding and immersing a part of the chain in the bath holding molten wax;
- a driving system to move the chain through the chain guiding system;
**characterized in that** said chain lubricating device comprises:
- a heating means to melt and heat wax in said bath;
- a control means to determine the temperature of the molten wax and to control the heating by the heating means in function of the determined temperature.

2. A chain lubricating device according to claim 1, wherein the control means comprises a PID temperature controlling means.

3. A chain lubricating device according to any one of the preceding claims, wherein the control means controls the movement of the chain by controlling the driving system.

4. A chain lubricating device according to any one of the preceding claims, wherein the driving system comprises at least one gear wheel for contacting and moving the chain.

5. A chain lubricating device according to any one of the preceding claims, wherein the chain guiding system comprises at least a first plunger to push the chain in the molten wax in the bath, said first plunger has a contact surface to contact the chain and is moveable from a first position to a second position, in the first position the lower point of the contact surface of the first plunger is above the bath, in the second position the lower point of the contact surface of the first plunger is in the bath.

6. A chain lubricating device according to claim 5, wherein the chain guiding system further comprises at least two idler pulleys both having their axis parallel to each other and perpendicular to the chain, wherein in the direction of movement of the chain, the two idler pulleys have their axes position under the chain but above the bath, the first plunger being positioned in direction of the chain movement, between the two idler pulleys.

7. A chain lubricating device according to any one of the preceding claims, wherein chain lubricating device comprises a high frequency vibrating device or an ultrasonic vibrating device adapted to vibrate the molten wax in the bath.

8. A chain lubricating device according to any one of the preceding claims, wherein the bath comprises a structure for holding a container or cartridge.

9. A chain lubricating device according to any one of the preceding claims, wherein the chain lubricating device further comprises a chain wear measuring means and/or a chain length measuring means.

10. A wax cartridge comprising a cuboid metal or metallic container at least partially filled with solid wax adapted to lubricate a chain once molten, said cuboid being at least partially, optionally fully open at one side, the open surface being sealed with a polymer film or lid.

11. A wax cartridge according to claim 10, wherein the metal or metallic container is an aluminum or aluminum alloy container.

12. A wax cartridge according to any one of the claims 10 to 11, wherein the cartridge comprises heat generating elements, preferably resistance wires.

13. A kit of parts comprising at least one chain lubricating device according to claim 9 and at least one wax cartridge according to any one of the claims 10 to 12.

14. A method to lubricate a chain of a bicycle, the method comprises
- providing a chain lubricating device according to any one of the claims 1 to 10;
- providing solid wax in the bath;
- melting and heating said solid wax in the bath;
- providing a chain to the chain lubricating device;
- moved the chain through the molten wax in the bath of the chain lubricating device along a part or the whole length of the chain, while controlling the temperature of the molten wax by heating said solid wax in the bath.

15. A method to lubricate a chain of a bicycle according to claim 14, wherein the bath comprises a structure for holding a cartridge, the step of providing solid wax in the bath comprises to provide a wax cartridge according to any one of the claims 10 to 12, removing the seal to open the cartridge, and providing the cartridge in the structure for holding a cartridge.

16. A method to lubricate a chain of a bicycle according to any one of the claims 14 to 15, wherein the chain is moved through the molten wax at a speed in the range of 2 to 20 chain links per minute.

17. A method to lubricate a chain of a bicycle according to any one of the claims 14 to 16, wherein the temperature of the molten wax in the bath is kept in the range of 50°C to 150°.
